# FASCICULE DE BREVET EUROPEEN

(11) **EP 3 792 796 B1**
(45) Date de publication et mention de la délivrance du brevet: **08.05.2024**
(21) Numéro de dépôt: 20191601.2
(22) Date de dépôt: 18.08.2020
(51) Int. Cl.: G06F 21/44

(54) **ENSEMBLE ET PROCÉDÉ POUR L IDENTIFICATION PAR UN USAGER D'UN VÉHICULE**
EINHEIT UND VERFAHREN ZUR IDENTIFIZIERUNG DURCH EINEN BENUTZER EINES FAHRZEUGS
ASSEMBLY AND METHOD FOR IDENTIFICATION OF A VEHICLE BY A USER

(30) Priorité: 16.09.2019 FR 1910192
(43) Date de publication de la demande: 17.03.2021
(73) Titulaire: Ampere SAS, 92100 Boulogne-Billancourt (FR)
(72) Inventeur: MENDES-CARVALHO, José, 31810 Venerque (FR)
(74) Mandataire: Renault Group

(56) Documents cités:
- FR-A1- 3 056 501
- US-A1- 2019 096 241
- US-B1- 7 369 061

## Description

L'invention concerne un ensemble et un procédé d'identification par un usager d'un véhicule, tel qu'un véhicule automobile, autonome ou non, par exemple pour un taxi autonome, ou encore un véhicule deux roues.

Le document US2019/096241 présente un système d'identification des véhicules à un péage, les documents US7369061 et FR3056501 proposent des aides au conducteur usuel d'un véhicule pour identifier son véhicule lorsqu'il est stationné, cependant ces solutions ne permettent pas d'aider efficacement un usager à identifier simplement le taxi autonome, inconnu dudit usager, qui lui a été alloué.

Un véhicule automobile autonome est un véhicule automobile comprenant des moyens de conduite aptes à se substituer à un conducteur humain. Un tel véhicule autonome est ainsi apte, sans action humaine, à se déplacer dans l'espace routier, de sorte à rejoindre une destination en respectant les règles de circulation et en tenant compte de son environnement.

L'apparition progressive des véhicules autonomes dans l'espace public est appelée à se généraliser tant aux véhicules individuels qu'aux véhicules de transport de personnes.

Une évolution probable dans le domaine de la mobilité urbaine et rurale est associée à l'apparition des taxis autonomes.

Les taxis autonomes permettent en particulier de répondre aux défis à venir en termes de concentration de la population dans de grandes agglomérations urbaines, en apportant une solution simple et peu coûteuse pour se déplacer.

Les taxis autonomes permettent en particulier de se substituer aux véhicules individuels, et permettent d'optimiser l'encombrement de l'espace routier ainsi que de l'espace de parking des véhicules, en optimisant le taux d'utilisation des véhicules automobiles en ville.

Une problématique dans le domaine des taxis autonomes, concerne la difficulté que peut rencontrer l'usager pour trouver le taxi qui lui est attribué lors de la réservation, en particulier lorsque plusieurs véhicules identiques sont proches les uns des autres.

Une solution évidente est d'installer sur le véhicule un identifiant de reconnaissance, tel qu'un numéro associé au taxi ou un numéro de commande. Toutefois un tel numéro est généralement peu aisé à visualiser et nécessite de bonnes conditions d'éclairage.

Une solution consiste alors à installer en plusieurs endroits du véhicule, par exemple au moins un écran à l'avant, à l'arrière, et sur chaque côté du véhicule de sorte à s'assurer que l'utilisateur soit apte à lire le numéro du taxi en toutes circonstances. Toutefois une telle solution est relativement chère à mettre en oeuvre et à maintenir.

Aussi il existe le besoin d'une solution plus simple pour permettre à un usager de trouver un véhicule, notamment un véhicule automobile ou un véhicule deux roues, en particulier un véhicule automobile autonome tel qu'un taxi autonome qui lui est attribué lors d'une réservation.

A cet effet on propose un ensemble pour l'identification par un usager d'un véhicule, ledit ensemble comportant au moins un véhicule à identifier, un dispositif de communication radiofréquence et un organe de gestion de l'identification ; le dispositif de communication radiofréquence comprenant un moyen d'émission d'un signal sensoriel et/ou visuel et des moyens d'activation dudit moyen d'émission d'un signal sensoriel et/ou visuel,
le véhicule comprenant des moyens d'émission lumineuse, des moyens de commande desdits moyens d'émission lumineuse, et des moyens de radiocom m unication.

L'organe de gestion de l'identification comprend des moyens de génération d'un signal de commande comprenant au moins une caractéristique fréquentielle et/ou temporelle prédéterminée,
ledit organe de gestion de l'identification étant adapté pour transmettre ledit signal de commande aux moyens de radiocommunication du véhicule et au dispositif de communication radiofréquence,
ledit organe de gestion étant en outre adapté pour synchroniser les moyens de commande des moyens d'émission lumineuse du véhicule et les moyens d'activation du moyen d'émission d'un signal sensoriel et/ou visuel du dispositif de communication radiofréquence,
lesdits moyens de commande des moyens d'émission lumineuse du véhicule étant alors adaptés pour allumer les moyens d'émission lumineuse du véhicule en fonction du signal de commande reçu, de manière synchronisée avec une activation du moyen d'émission d'un signal sensoriel et/ou visuel dudit dispositif de radiofréquence par les moyens d'activation en fonction dudit signal de commande reçu.

Ainsi on obtient un ensemble d'identification permettant à un utilisateur de détecter de manière relativement simple un véhicule automobile, en particulier un taxi autonome, en associant la séquence lumineuse produite par le taxi avec un signal visuel ou sensoriel produit sur son dispositif de communication radiofréquence, ici son smartphone ou téléphone portable.

L'ensemble comprend un serveur de synchronisation d'horloge, ledit organe de gestion étant adapté pour synchroniser une horloge des moyens de commande des moyens d'émission lumineuse du véhicule avec une horloge des moyens d'activation du moyen d'émission d'un signal sensoriel et/ou visuel du dispositif de communication radiofréquence, en commandant leur connexion audit serveur de synchronisation d'horloge et l'acquisition d'une valeur d'horloge depuis ledit serveur d'horloge. Ainsi, on peut s'assurer d'avoir un signal lumineux émis sur le véhicule synchronisé avec le signal lumineux ou sensoriel émis sur le dispositif de communication radiofréquence.

Avantageusement et de manière non limitative, ledit dispositif de communication radiofréquence comprend un écran et/ou un vibreur, respectivement pour émettre un signal lumineux sur ledit écran ou un signal sensoriel via le vibreur. Aussi le smartphone peut être employé de manière visuelle et/ou sensoriel pour simplifier la détection du taxi. En particulier le vibreur permet à l'utilisateur de ressentir la séquence rythmique associée au taxi sans avoir à regarder son smartphone.

Avantageusement et de manière non limitative, les moyens d'émission lumineuse du véhicule comprennent au moins un phare du véhicule et/ou au moins un feu clignotant et/ou une signalétique lumineuse de toit. Ainsi, l'ensemble est relativement peu coûteux car ces moyens sont présents sur tous les véhicule, en particulier les taxis, et les phares sont des dispositifs toujours disponibles en commande sur un véhicule.

Avantageusement et de manière non limitative, ledit organe de gestion de l'identification comprend un serveur distant apte à communiquer avec le véhicule et avec ledit dispositif de communication radiofréquence par des moyens de télécommunication. Ainsi la commande peut être réalisée de manière décentralisée.

Avantageusement et de manière non limitative, le signal de commande comprend un signal carré. Ainsi le signal est relativement simple à générer et à transmettre.

Avantageusement et de manière non limitative, la fréquence du signal de commande comprend une succession de créneaux de durées prédéterminées. Ainsi, on peut aisément définir ces signaux, par exemple en fonction d'une pluralité de modèles prédéterminés.

Avantageusement et de manière non limitative, le véhicule et le dispositif de communication radiofréquence comprennent chacun des moyens de géolocalisation, caractérisé en ce que le signal de commande comprend une succession de créneaux dont la durée est fonction de la distance entre le véhicule et le dispositif de communication radiofréquence. Ainsi, on peut obtenir une identification améliorée en permettant à l'utilisateur de détecter de manière intuitive sa proximité avec le véhicule.

L'invention concerne aussi un procédé de gestion d'un ensemble pour l'identification par un usager d'un véhicule, ledit ensemble comportant au moins un véhicule à identifier, un dispositif de communication radiofréquence et un organe de gestion de l'identification; le dispositif de communication radiofréquence comprenant un moyen d'émission d'un signal sensoriel et/ou visuel et des moyens d'activation dudit moyen d'émission d'un signal sensoriel et/ou visuel, le véhicule automobile comprenant des moyens d'émission lumineuse , des moyens de commande desdits moyens d'émission lumineuse , et des moyens de radiocommunication.

Ledit procédé comprend :
une étape de génération d'un signal de commande comprenant au moins une caractéristique fréquentielle et/ou temporelle prédéterminée,
une étape de transmission dudit signal de commande aux moyens de radiocommunication du véhicule automobile et au dispositif de communication radiofréquence,
une étape de synchronisation des moyens de commande des moyens d'émission lumineuse du véhicule et des moyens d'activation du moyen d'émission d'un signal sensoriel et/ou visuel du dispositif de communication radiofréquence,
une étape de déclenchement de l'identification commandant aux moyens de commande des moyens d'émission lumineuse du véhicule automobile d'allumer les moyens d'émission lumineuse du véhicule automobile en fonction du signal de commande reçu, simultanément avec la commande de l'activation du moyen d'émission d'un signal sensoriel et/ou visuel dudit dispositif de radiofréquence par les moyens d'activation en fonction du signal de commande reçu.

L'invention concerne aussi un organe de gestion pour un ensemble pour l'identification par un usager d'un véhicule, tel qu'une véhicule automobile, notamment un véhicule automobile autonome, tel que décrit précédemment, comprenant des moyens pour mettre en oeuvre un procédé tel que décrit précédemment.

L'invention est maintenant décrite en référence aux dessins annexés, non limitatifs, dans lesquels :
La figure 1 est une vue schématique d'une ensemble selon un mode de réalisation de l'invention ;
La figure 2a est une représentation temporelle d'un signal de commande généré par l'organe de gestion de l'identification de l'ensemble selon le mode de réalisation de la figure 1;
La figure 2b est une représentation temporelle d'un autre signal de commande, par exemple pour un autre véhicule autonome, généré par l'organe de gestion de l'identification de l'ensemble selon le mode de réalisation de la figure 1;
La figure 3 est une représentation temporelle d'un signal de commande généré par l'organe de gestion de l'identification de l'ensemble selon un deuxième mode de réalisation de l'invention ; et
La figure 4 est un organigramme d'un procédé selon un mode de réalisation de l'invention.

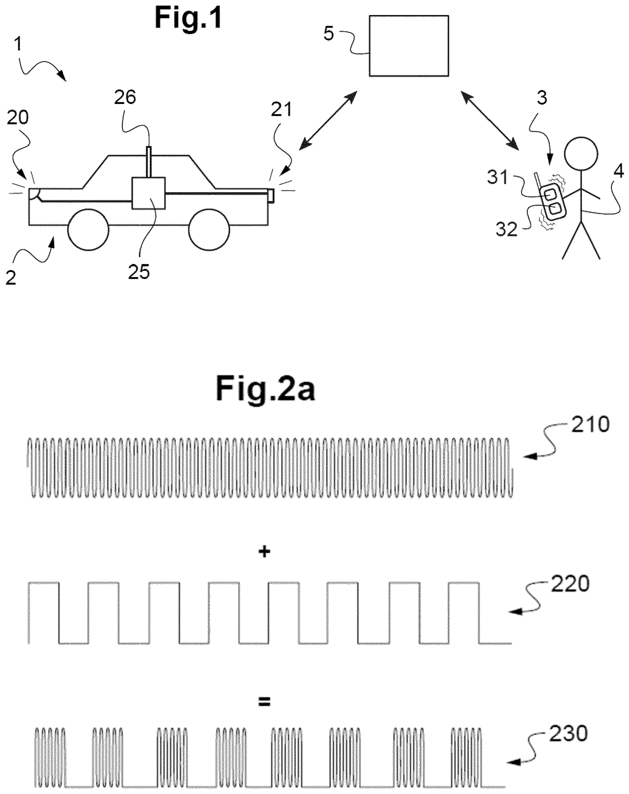

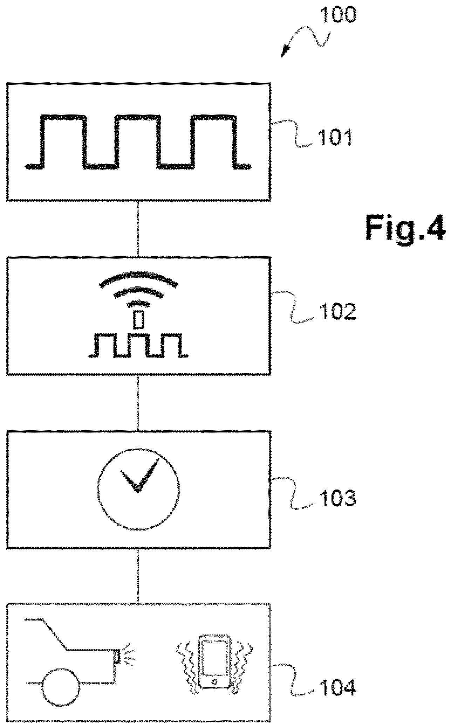

Les figures 1, 2a, 2b et 4, se rapportant à un même mode de réalisation, elles seront commentées simultanément.

Un ensemble 1 pour l'identification par un usager 4 d'un véhicule, tel qu'un véhicule automobile ou un véhicule deux-roues, dans ce mode de réalisation, mais à titre non limitatif, un véhicule automobile autonome 2, comprend un véhicule automobile autonome 2 à identifier, un dispositif de communication radiofréquence 3 et un organe de gestion de l'identification 5.

Le dispositif de communication radiofréquence 3 est dans le mode de réalisation principal de l'invention un smartphone 3, aussi appelé téléphone portable. Un tel smartphone comprend généralement un écran, un vibreur 32 commandé par des moyens d'activation 31 et des moyens de communication radiofréquence, tel que des moyens de communication GSM, Wifi, Bluetooth, ou tout autre moyen de radiocommunication connu pour les appareils mobiles. L'invention peut évidemment être mise en oeuvre à partir de tout autre moyen de télécommunication mobile, tel qu'une tablette, un ordinateur portable, ou tout autre appareil adapté.

Le véhicule automobile 2 comprenant des moyens d'émission lumineuse 20,21. Ces moyens d'émission lumineuse 20, 21 sont dans le mode de réalisation principal des phares, mais peuvent de manière toute aussi efficace comprendre les feux clignotants du véhicule, ou lorsqu'il s'agit d'un véhicule taxi, l'avertisseur lumineux de toit.

L'objectif de l'invention est en effet de permettre à un usager de percevoir de manière relativement simple, et à distance, un avertissement lumineux particulier émis par le véhicule automobile, de manière synchronisé avec un signal émis par son dispositif de communication radiofréquence 3, de manière visuelle, par exemple par un écran d'affichage ou une diode électroluminescente de notification, ou sensorielle, par exemple par un vibreur 32. Aussi tous les moyens d'éclairage commandé d'un véhicule automobile peuvent être employé en tant que moyens d'émission lumineuse 20,21, tant les phares, que les feux clignotants, les avertisseur lumineux de toits des taxis ou encore les gyrophares, feux de pénétrations et tout autre avertisseur connus des véhicules d'urgence.

Le véhicule comprend en outre des moyens de commande 25 des moyens d'émission lumineuse, ici un calculateur embarqué apte à commander à partir d'un signal fourni, une séquence d'identification lumineuse par les moyens d'émission lumineuse 20, 21.

Le véhicule comprend en outre des moyens de radiocommunication 26 aptes à communiquer avec l'organe de gestion de l'identification 5 via un réseau de télécommunication sans fil tel qu'un réseau GSM, sans fil. En particulier les moyens de radiocommunication 26 sont un système de communication inter-véhicules 26, plus généralement connu sous son appellation anglophone *Inter-Vehicle Communications,* fréquemment abrégé IVC

L'organe de gestion de l'identification 5 est ici un serveur distant 5.

L'organe de gestion de l'identification 5 est adapté pour mettre un oeuvre un procédé 100 de gestion de l'ensemble 1 pour l'identification par un usager, possédant le dispositif de communication radiofréquence 3, ici un smartphone 3, d'un véhicule automobile autonome à atteindre, ici un taxi autonome.

Pour ce faire, l'organe de gestion 5 met en oeuvre une étape de génération 101 d'un signal de commande 220, 220' comprenant au moins une caractéristique fréquentielle et/ou temporelle prédéterminée.

Le signal généré 220, 220' est dans ce mode de réalisation de l'invention un signal carré, afin de pouvoir commander notamment les organes lumineux du véhicule automobile selon un commande simple allumée/éteint, ainsi que le vibreur d'un téléphone portable, ou smartphone, selon un mode vibrant/non vibrant.

Toutefois selon un mode de réalisation alternatif de l'invention, le signal généré peut prendre toute autre forme, tel qu'un signal sinusoïdal de fréquence et/ou d'amplitude variable, un signal triangulaire, en dent de scie, ou encore un signal carré à plus de deux plateaux d'amplitude. En particulier des signaux présentant différentes valeurs d'amplitude peuvent être employés lorsque les organes lumineux du véhicule automobile peuvent être commandés en intensité lumineuse.

Cependant, une séquence rythmique d'un signal lumineux binaire, selon le mode allumé/éteint, présente une facilité de reconnaissance par l'usager particulièrement efficace.

Le signal carré généré, par exemple 220, présente toutefois une séquence rythmique d'enchaînement de créneaux particulière de sorte à se distinguer d'une autre séquence rythmique d'un autre signal carré généré, par exemple 220', pour un autre utilisateur associé à un autre véhicule automobile.

Ainsi, deux utilisateurs devant chacun rejoindre un taxi autonome proche l'un de l'autre, pourront distinguer leurs taxis respectifs en reconnaissant chacun la séquence lumineuse rythmique de son taxi.

En pratique, la définition par l'organe de gestion 5 d'un ensemble d'une dizaine de modèles de signaux d'identification différents, distingués par leurs caractéristiques temporelles, rythmique et/ou fréquentielles, généralement appelé en anglais *pattern,* permet à l'organe de gestion 5 de gérer la plupart des cas de reconnaissance d'un taxi parmi une pluralité de taxi. Toutefois un plus grand nombre de modèles de signaux d'identification peut être prédéterminé.

Dans le mode de réalisation principal de l'invention le modèle de signal d'identification est prédéterminé par l'organe de gestion 5. Toutefois on peut prévoir selon une alternative de mise en oeuvre que l'utilisateur soit apte à sélectionner, via son smartphone 3 le signal d'identification à employer, par exemple par l'intermédiaire d'une interface visuelle de sélection.

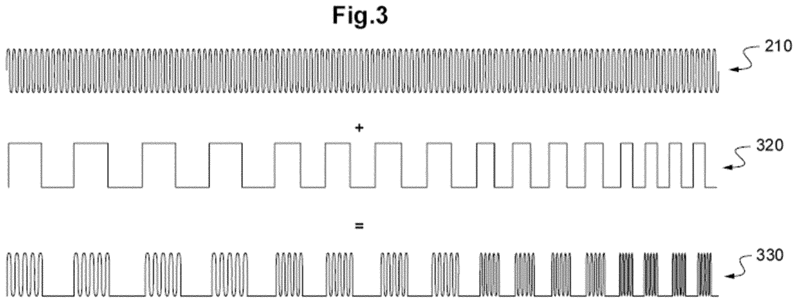

Selon un deuxième mode de réalisation de l'invention, en référence à la figure 3, le véhicule automobile autonome est géolocalisé, par exemple par des moyens GPS, ainsi que le dispositif de radiocommunication 3 de l'utilisateur.

Ces données de géolocalisation sont transmises à l'organe de gestion 5 qui génère un signal d'identification 320 fonction de la distance entre le véhicule automobile 2 et l'utilisateur possédant le dispositif de radiocommunication 3. Ici la séquence rythmique génère des créneaux de période décroissante à mesure que l'utilisateur approche du véhicule automobile.

En effet, l'invention permet à un usager de détecter le taxi autonome qui lui est attribué en associant une séquence visuelle, ici lumineuse, émise par le véhicule automobile, avec une séquence visuelle ou sensorielle générée par son dispositif de communication radiofréquence 3, respectivement sur un écran d'affichage ou une diode électroluminescente de notification, ou par des vibrations générées par un vibreur 32, de manière synchronisée.

On entend à cet effet par le terme synchronisée, synchrone ou encore simultané, le fait que les deux générations visuelles et/ou sensorielles respectives, d'une part sur le véhicule automobile et d'autre part sur le smartphone sont décalées au plus de 150ms, et préférentiellement de moins de 10ms.

Le signal généré 220, 220', 320 est destiné à être appliquée d'une part comme séquence temporelle de commande par le moyen de commande 25 des moyens d'émission lumineuse 20,21, et d'autre part appliqué comme séquence temporelle de génération d'un signal visuel ou sensoriel sur le dispositif de communication radiofréquence 3, ici sous forme de séquence vibratoire 230, 230', 330 par le vibreur du smartphone de l'utilisateur.

Aussi, le procédé 100 comprend ensuite une étape de transmission 102 du signal généré 220, 220', 320 aux moyens de commande 25, via les moyens de radiocommunication 26 du véhicule automobile 2 et au dispositif de communication radiofréquence 3.

Afin d'assurer une reconnaissance aisée par l'utilisateur du signal visuel généré sur le véhicule automobile de manière synchronisé avec le smartphone, il est nécessaire de s'assurer que les dispositifs soient correctement synchronisés.

A cet effet, le procédé 100 met en oeuvre une étape de synchronisation 103 des horloges des moyens de commande du véhicule automobile et de du dispositif de communication radiofréquence.

Cet étape de synchronisation 103 comprend ici la connexion de chacun des dispositifs, véhicule automobile 2 et dispositif de communication radiofréquence 3, à un serveur de synchronisation, sous la forme d'une requête, par exemple selon un protocole de réseau NTP (*Network Time Protocol*).

En réponse à cette requête le serveur de synchronisation forme un paquet *NTP* avec les données nécessaires et le renvoie à l'appareil d'utilisateur et au véhicule automobile.

La fonction insérée de la synchronisation dans chacun des dispositifs traite le paquet et ajuste l'horloge interne de l'appareil, véhicule automobile 2 et dispositif de communication radiofréquence 3, en utilisant les données du paquet NTP.

Une précision de synchronisation de l'ordre de 10 millisecondes est ainsi atteinte grâce au fait que la fonction de réglage du temps prend en compte le délai entre l'envoi de la requête et la réception du paquet NTP de serveur.

Cette étape de synchronisation 103 peut être faite soit à chaque mise en oeuvre du procédé 100, soit de manière périodique, par exemple une fois par jour, une fois par semaine ou selon toute fréquence temporelle adaptée.

Une fois les horloges internes synchronisées, le procédé 100 met alors en oeuvre une étape déclenchement 104 de l'identification commandant aux moyens de commande 25 du véhicule automobile 2 de commander les moyens d'émission lumineuse 20 en fonction du signal de commande 220,200',320 reçu, simultanément avec la commande des moyens d'activation 31 pour activer les moyens d'émission d'un signal sensoriel et/ou visuel 32 dudit dispositif de radiofréquence 3, ici le vibreur du smartphone 3.

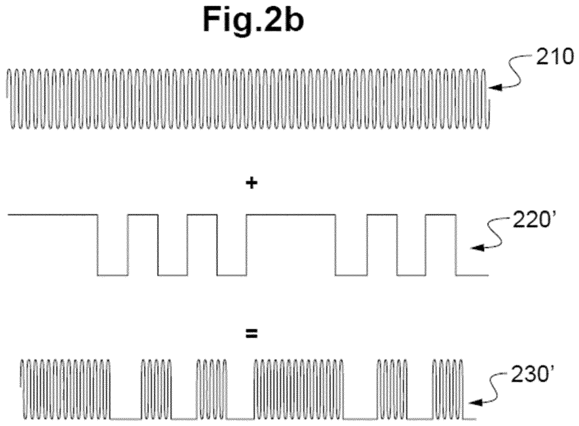

Ce vibreur possède une fréquence de vibration 210 propre produite par le moteur du vibreur, appelé en anglais *Vibration Motor.* Cette fréquence de vibration 210 est additionnée au signal de commande 220,200',320 de sorte à produire un signal de vibration 230, 230' 330 tel que représenté respectivement figure 2a, 2b et 3.

Lorsque le signal de commande est fonction de la distance entre le véhicule automobile et l'utilisateur, selon le deuxième mode de réalisation de l'invention, la fréquence du moteur du vibreur peut aussi être commandée de sorte à augmenter, de manière préférée, lorsque l'utilisateur se rapproche du véhicule.

Une mise en oeuvre d'un tel signal peut être réalisée selon le tableau ci-dessous :

| Distance smartphone/véhicule | Fréquence signal de commande | Fréquence vibreur |
|---|---|---|
| 30 m | 2Hz | 50 Hz |
| 20 m | 3Hz | 75 Hz |
| 15 m | 4Hz | 100 Hz |
| 10 m | 5 Hz | 150 Hz |
| 5m | 6 Hz | 200 Hz |

Le déclenchement de l'identification du taxi peut notamment être commandé par le procédé 100 dès que l'utilisateur et le véhicule sont à une distance relativement faible, par exemple à partir d'une distance entre 30 et 50 mètres.

Alternativement l'utilisateur peut commander le déclenchement de la détection lorsqu'il pense être en mesure de visualiser le taxi.

L'utilisation de modèles 3D des villes peut en outre assister le système pour s'assurer que le contact visuel est possible.

## Revendications

1. Ensemble (1) pour l'identification par un usager (4) d'un véhicule (2), ledit ensemble (1) comportant au moins un véhicule (2) à identifier, un dispositif de communication radiofréquence (3) et un organe de gestion de l'identification (5) ; le dispositif de communication radiofréquence (3) comprenant un moyen d'émission (32) d'un signal sensoriel et/ou visuel et des moyens d'activation (31) dudit moyen d'émission (32) d'un signal sensoriel et/ou visuel,
le véhicule (2) comprenant des moyens d'émission lumineuse (20,21), des moyens de commande (25) desdits moyens d'émission lumineuse (20,21), et des moyens de radiocommunication (26),
ledit organe de gestion de l'identification (5) comprenant des moyens de génération d'un signal de commande (220,220',320) comprenant au moins une caractéristique fréquentielle et/ou temporelle prédéterminée,
ledit organe de gestion de l'identification (5) étant adapté pour transmettre ledit signal de commande (220,220',320) aux moyens de radiocommunication (26) du véhicule (2) et au dispositif de communication radiofréquence (3),
ledit organe de gestion (5) étant en outre adapté pour synchroniser les moyens de commande (25) des moyens d'émission lumineuse (20,21) du véhicule (2) et les moyens d'activation (31) du moyen d'émission (32) d'un signal sensoriel et/ou visuel du dispositif de communication radiofréquence (3),
lesdits moyens de commande (25) des moyens d'émission lumineuse (20,21) du véhicule (2) étant alors adaptés pour allumer les moyens d'émission lumineuse (20,21) du véhicule (2) en fonction du signal de commande (220,220',320) reçu, de manière synchronisée avec une activation du moyen d'émission (32) d'un signal sensoriel et/ou visuel dudit dispositif de radiofréquence (3) par les moyens d'activation (31) en fonction dudit signal de commande (220,220',320) reçu,
ledit ensemble comprenant en outre un serveur de synchronisation d'horloge, ledit organe de gestion (5) étant adapté pour synchroniser une horloge des moyens de commande (25) des moyens d'émission lumineuse (20,21) du véhicule (2) avec une horloge des moyens d'activation (31) du moyen d'émission (32) d'un signal sensoriel et/ou visuel du dispositif de communication radiofréquence (3), en commandant leur connexion audit serveur de synchronisation d'horloge et l'acquisition d'une valeur d'horloge depuis ledit serveur d'horloge.

2. Ensemble (1) selon la revendication 1, **caractérisé en ce que** ledit dispositif de communication radiofréquence (3) comprend un écran et/ou un vibreur, respectivement pour émettre un signal lumineux sur ledit écran ou un signal sensoriel via le vibreur.

3. Ensemble (1) selon la revendication 1 ou 2, **caractérisé en ce que** les moyens d'émission lumineuse (20, 21) du véhicule (2) comprennent au moins un phare du véhicule (2) et/ou au moins un feu clignotant et/ou une signalétique lumineuse de toit.

4. Ensemble (1) selon l'une quelconque des revendications 1 à 3 **caractérisé en ce que** ledit organe de gestion de l'identification (5) comprend un serveur distant (5) apte à communiquer avec le véhicule (2) et avec ledit dispositif de communication radiofréquence (3) par des moyens de télécommunication.

5. Ensemble (1) selon l'une quelconque des revendications 1 à 4, **caractérisé en ce que** le signal de commande (220,220',320) comprend un signal carré.

6. Ensemble selon la revendication 5, **caractérisé en ce que** la fréquence du signal de commande (220,220',320) comprend une succession de créneaux de durées prédéterminées.

7. Ensemble selon la revendication 5, dans lequel le véhicule (2) et le dispositif de communication radiofréquence (3) comprennent chacun des moyens de géolocalisation, **caractérisé en ce que** le signal de commande (320) comprend une succession de créneaux dont la durée est fonction de la distance entre le véhicule (2) et le dispositif de communication radiofréquence (3).

8. Procédé (100) de gestion d'un ensemble pour l'identification par un usager d'un véhicule (2), ledit ensemble comportant au moins un véhicule (2) à identifier, un dispositif de communication radiofréquence (3) et un organe de gestion de l'identification (5); le dispositif de communication radiofréquence (3) comprenant un moyen d'émission (32) d'un signal sensoriel et/ou visuel et des moyens d'activation (31) dudit moyen d'émission (32) d'un signal sensoriel et/ou visuel, le véhicule (2) comprenant des moyens d'émission lumineuse (20, 21), des moyens de commande (25) desdits moyens d'émission lumineuse (20, 21), et des moyens de radiocommunication (26),
ledit procédé (100) comprenant: une étape de génération (101) d'un signal de commande (220,220',320) comprenant au moins une caractéristique fréquentielle et/ou temporelle prédéterminée,
une étape de transmission (102) dudit signal de commande (220,220',320) aux moyens de radiocommunication (26) du véhicule (2) et au dispositif de communication radiofréquence (3),
une étape de synchronisation (103) des moyens de commande (25) des moyens d'émission lumineuse (20,21) du véhicule (2) et des moyens d'activation (31) du moyen d'émission (32) d'un signal sensoriel et/ou visuel du dispositif de communication radiofréquence (3), ledit ensemble comprenant en outre un serveur de synchronisation d'horloge, ledit organe de gestion (5) étant adapté pour synchroniser une horloge des moyens de commande (25) des moyens d'émission lumineuse (20,21) du véhicule (2) avec une horloge des moyens d'activation (31) du moyen d'émission (32) d'un signal sensoriel et/ou visuel du dispositif de communication radiofréquence (3), en commandant leur connexion audit serveur de synchronisation d'horloge et l'acquisition d'une valeur d'horloge depuis ledit serveur d'horloge,
une étape de déclenchement (104) de l'identification commandant aux moyens de commande (25) des moyens d'émission lumineuse du véhicule (2) d'allumer les moyens d'émission lumineuse (20, 21) du véhicule (2) en fonction du signal de commande (220,200',320) reçu, simultanément avec la commande de l'activation du moyen d'émission (32) d'un signal sensoriel et/ou visuel dudit dispositif de radiofréquence (3) par les moyens d'activation (31) en fonction du signal de commande (220,220',320) reçu.

9. Organe de gestion (5) pour un ensemble (1) pour l'identification par un usager d'un véhicule (2) selon l'une quelconque des revendications 1 à 7, comprenant des moyens pour mettre en oeuvre un procédé (100) selon la revendication 8.

## Patentansprüche

1. Anordnung (1) zur Identifizierung durch einen Benutzer (4) eines Fahrzeugs (2), wobei die Anordnung (1) mindestens ein zu identifizierendes Fahrzeug (2), eine Funkfrequenzkommunikationsvorrichtung (3) und ein Identifizierungsverwaltungselement (5) aufweist; wobei die Funkfrequenzkommunikationsvorrichtung (3) ein Ausgabemittel (32) für ein sensorisches und/oder visuelles Signal und Aktivierungsmittel (31) des Ausgabemittels (32) für ein sensorisches und/oder visuelles Signal umfasst,
wobei das Fahrzeug (2) Lichtausgabemittel (20,21), Steuermittel (25) der Lichtausgabemittel (20,21) und Funkkommunikationsmittel (26) umfasst,
wobei das Identifizierungsverwaltungselement (5) Mittel zum Erzeugen eines Steuersignals (220,220',320) umfasst, das mindestens ein vorbestimmtes Frequenz- und/oder Zeitmerkmal umfasst,
wobei das Identifizierungsverwaltungselement (5) geeignet ist, das Steuersignal (220,220',320) an die Funkkommunikationsmittel (26) des Fahrzeugs (2) und an die Funkfrequenzkommunikationsvorrichtung (3) zu übertragen,
wobei das Verwaltungselement (5) ferner geeignet ist, die Steuermittel (25) der Lichtausgabemittel (20,21) des Fahrzeugs (2) und die Aktivierungsmittel (31) des Ausgabemittels (32) für ein sensorisches und/oder visuelles Signal der Funkfrequenzkommunikationsvorrichtung (3) zu synchronisieren,
wobei die Steuermittel (25) der Lichtausgabemittel (20,21) des Fahrzeugs (2) dann geeignet sind, die Lichtausgabemittel (20,21) des Fahrzeugs (2) in Abhängigkeit von dem empfangenen Steuersignal (220,220',320) auf synchronisierte Weise mit einer Aktivierung des Ausgabemittels (32) für ein sensorisches und/oder visuelles Signal der Funkfrequenzvorrichtung (3) durch die Aktivierungsmittel (31) in Abhängigkeit von dem empfangenen Steuersignal (220,220',320) einzuschalten,
wobei die Anordnung ferner einen Taktsynchronisierungsserver umfasst, wobei das Verwaltungselement (5) geeignet ist, einen Takt der Steuermittel (25) der Lichtausgabemittel (20,21) des Fahrzeugs (2) mit einem Takt der Aktivierungsmittel (31) des Ausgabemittels (32) für ein sensorisches und/oder visuelles Signal der Funkfrequenzkommunikationsvorrichtung (3) zu synchronisieren, indem ihre Verbindung mit dem Taktsynchronisierungsserver und das Erfassen eines Taktwerts von dem Taktserver aus gesteuert werden.

2. Anordnung (1) nach Anspruch 1, **dadurch gekennzeichnet, dass** die Funkfrequenzkommunikationsvorrichtung (3) einen Bildschirm und/oder eine Vibrationseinrichtung umfasst, um ein Lichtsignal auf dem Bildschirm beziehungsweise ein sensorisches Signal über die Vibrationseinrichtung auszugeben.

3. Anordnung (1) nach Anspruch 1 oder 2, **dadurch gekennzeichnet, dass** die Lichtausgabemittel (20, 21) des Fahrzeugs (2) mindestens einen Scheinwerfer des Fahrzeugs (2) und/oder mindestens eine Blinkleuchte und/oder ein Dachleuchtschild umfassen.

4. Anordnung (1) nach einem der Ansprüche 1 bis 3, **dadurch gekennzeichnet, dass** das Identifizierungsverwaltungselement (5) einen entfernten Server (5) umfasst, der geeignet ist, mit dem Fahrzeug (2) und mit der Funkfrequenzkommunikationsvorrichtung (3) über Telekommunikationsmittel zu kommunizieren.

5. Anordnung (1) nach einem der Ansprüche 1 bis 4, **dadurch gekennzeichnet, dass** das Steuersignal (220,220',320) ein Rechtecksignal umfasst.

6. Anordnung nach Anspruch 5, **dadurch gekennzeichnet, dass** die Frequenz des Steuersignals (220,220',320) eine Folge von Impulsen mit vorbestimmten Dauern umfasst.

7. Anordnung nach Anspruch 5, bei der das Fahrzeug (2) und die Funkfrequenzkommunikationsvorrichtung (3) jeweils Geolokalisierungsmittel umfassen, **dadurch gekennzeichnet, dass** das Steuersignal (320) eine Folge von Impulsen umfasst, deren Dauer von der Entfernung zwischen dem Fahrzeug (2) und der Funkfrequenzkommunikationsvorrichtung (3) abhängig ist.

8. Verfahren (100) zum Verwalten einer Anordnung zur Identifizierung durch einen Benutzer eines Fahrzeugs (2), wobei die Anordnung mindestens ein zu identifizierendes Fahrzeug (2), eine Funkfrequenzkommunikationsvorrichtung (3) und ein Identifizierungsverwaltungselement (5) aufweist; wobei die Funkfrequenzkommunikationsvorrichtung (3) ein Ausgabemittel (32) für ein sensorisches und/oder visuelles Signal und Aktivierungsmittel (31) des Ausgabemittels (32) für ein sensorisches und/oder visuelles Signal umfasst, wobei das Fahrzeug (2) Lichtausgabemittel (20, 21), Steuermittel (25) der Lichtausgabemittel (20, 21) und Funkkommunikationsmittel (26) umfasst,
wobei das Verfahren (100) umfasst:
einen Schritt des Erzeugens (101) eines Steuersignals (220,220',320), das mindestens ein vorbestimmtes Frequenz- und/oder Zeitmerkmal umfasst,
einen Schritt des Übertragens (102) des Steuersignals (220,220',320) an die Funkkommunikationsmittel (26) des Fahrzeugs (2) und an die Funkfrequenzkommunikationsvorrichtung (3),
einen Schritt des Synchronisierens (103) der Steuermittel (25) der Lichtausgabemittel (20,21) des Fahrzeugs (2) und der Aktivierungsmittel (31) des Ausgabemittels (32) für ein sensorisches und/oder visuelles Signal der Funkfrequenzkommunikationsvorrichtung (3), wobei die Anordnung ferner einen Taktsynchronisierungsserver umfasst, wobei das Verwaltungselement (5) geeignet ist,
einen Takt der Steuermittel (25) der Lichtausgabemittel (20,21) des Fahrzeugs (2) mit einem Takt der Aktivierungsmittel (31) des Ausgabemittels (32) für ein sensorisches und/oder visuelles Signal der Funkfrequenzkommunikationsvorrichtung (3) zu synchronisieren, indem ihre Verbindung mit dem Taktsynchronisierungsserver und das Erfassen eines Taktwerts von dem Taktserver aus gesteuert werden,
einen Schritt des Auslösens (104) der Identifizierung, indem die Steuermittel (25) der Lichtausgabemittel des Fahrzeugs (2) zum Einschalten der Lichtausgabemittel (20, 21) des Fahrzeugs (2) in Abhängigkeit von dem empfangenen Steuersignal (220,200',320) angesteuert werden, gleichzeitig mit dem Ansteuern der Aktivierung des Ausgabemittels (32) für ein sensorisches und/oder visuelles Signal der Funkfrequenzvorrichtung (3) durch die Aktivierungsmittel (31) in Abhängigkeit von dem empfangenen Steuersignal (220,220',320).

9. Verwaltungselement (5) für eine Anordnung (1) zur Identifizierung durch einen Benutzer eines Fahrzeugs (2) nach einem der Ansprüche 1 bis 7, umfassend Mittel zur Durchführung eines Verfahrens (100) nach Anspruch 8.

## Claims

1. Assembly (1) for the identification of a vehicle (2) by a user (4), said assembly (1) comprising at least one vehicle (2) to be identified, a radiofrequency communication device (3) and an identification management unit (5), the radiofrequency communication device (3) comprising a transmission means (32) for transmitting a sensory and/or visual signal and activation means (31) for activating said transmission means (32) for transmitting a sensory and/or visual signal,
the vehicle (2) comprising light-emitting means (20, 21), control means (25) for controlling said light-emitting means (20, 21), and radiocommunication means (26),
said identification management unit (5) comprising generation means for generating a control signal (220, 220', 320) having at least one predetermined frequency-domain and/or time-domain characteristic,
said identification management unit (5) being designed to transmit said control signal (220, 220', 320) to the radiocommunication means (26) of the vehicle (2) and to the radiofrequency communication device (3),
said management unit (5) further being designed to synchronize the control means (25) for controlling the light-emitting means (20, 21) of the vehicle (2) and the activation means (31) for activating the transmission means (32) for transmitting a sensory and/or visual signal of the radiofrequency communication device (3),
said control means (25) for controlling the light-emitting means (20, 21) of the vehicle (2) then being designed to turn on the light-emitting means (20, 21) of the vehicle (2) as a function of the received control signal (220, 220', 320) in a manner synchronized with an activation of the transmission means (32) for transmitting a sensory and/or visual signal of said radiofrequency device (3) by way of the activation means (31) as a function of said received control signal (220, 220', 320),
said assembly further comprising a clock synchronization server, said management unit (5) being designed to synchronize a clock of the control means (25) for controlling the light-emitting means (20, 21) of the vehicle (2) with a clock of the activation means (31) for activating the transmission means (32) for transmitting a sensory and/or visual signal of the radiofrequency communication device (3) by controlling their connection to said clock synchronization server and the acquisition of a clock value from said clock server.

2. Assembly (1) according to Claim 1, **characterized in that** said radiofrequency communication device (3) comprises a screen and/or vibrator for transmitting a luminous signal on said screen or a sensory signal via the vibrator, respectively.

3. Assembly (1) according to Claim 1 or 2, **characterized in that** the light-emitting means (20, 21) of the vehicle (2) comprise at least one headlight of the vehicle (2) and/or at least one indicator and/or roof-mounted luminous signalling means.

4. Assembly (1) according to any one of Claims 1 to 3, **characterized in that** said identification management unit (5) comprises a remote server (5) able to communicate with the vehicle (2) and with said radiofrequency communication device (3) by way of telecommunication means.

5. Assembly (1) according to any one of Claims 1 to 4, **characterized in that** the control signal (220, 220', 320) comprises a square-wave signal.

6. Assembly according to Claim 5, **characterized in that** the frequency of the control signal (220, 220', 320) comprises a succession of square-wave pulses of predetermined durations.

7. Assembly according to Claim 5, wherein the vehicle (2) and the radiofrequency communication device (3) each comprise geolocation means, **characterized in that** the control signal (320) comprises a succession of square-wave pulses the duration of which is a function of the distance between the vehicle (2) and the radiofrequency communication device (3).

8. Method (100) for managing an assembly for the identification of a vehicle (2) by a user, said assembly comprising at least one vehicle (2) to be identified, a radiofrequency communication device (3) and an identification management unit (5), the radiofrequency communication device (3) comprising a transmission means (32) for transmitting a sensory and/or visual signal and activation means (31) for activating said transmission means (32) for transmitting a sensory and/or visual signal, the vehicle (2) comprising light-emitting means (20, 21), control means (25) for controlling said light-emitting means (20, 21), and radiocommunication means (26),
said method (100) comprising:
a step (101) of generating a control signal (220, 220', 320) having at least one predetermined frequency-domain and/or time-domain characteristic,
a step (102) of transmitting said control signal (220, 220', 320) to the radiocommunication means (26) of the vehicle (2) and to the radiofrequency communication device (3),
a step (103) of synchronizing the control means (25) for controlling the light-emitting means (20, 21) of the vehicle (2) and the activation means (31) for activating the transmission means (32) for transmitting a sensory and/or visual signal of the radiofrequency communication device (3), said assembly further comprising a clock synchronization server, said management unit (5) being designed to synchronize a clock of the control means (25) for controlling the light-emitting means (20, 21) of the vehicle (2) with a clock of the activation means (31) for activating the transmission means (32) for transmitting a sensory and/or visual signal of the radiofrequency communication device (3) by controlling their connection to said clock synchronization server and the acquisition of a clock value from said clock server,
a step (104) of triggering the identification, commanding the control means (25) for controlling the light-emitting means of the vehicle (2) to turn on the light-emitting means (20, 21) of the vehicle (2) as a function of the received control signal (220, 200', 320) simultaneously with command of the activation of the transmission means (32) for transmitting a sensory and/or visual signal of said radiofrequency device (3) by the activation means (31) as a function of the received control signal (220, 220', 320).

9. Management unit (5) for an assembly (1) for the identification of a vehicle (2) by a user according to any one of Claims 1 to 7, comprising means for implementing a method (100) according to Claim 8.
